# EUROPÄISCHE PATENTANMELDUNG

(11) **EP 4 737 103 A1**
(43) Veröffentlichungstag der Anmeldung: **06.05.2026**
(21) Anmeldenummer: 25211900.3
(22) Anmeldetag: 29.10.2025
(51) Int. Cl.: B29C 70/54, F15D 1/02, G01F 1/66, B29C 70/48

(54) **SYSTEM ZUR DURCHFÜHRUNG EINES RTM (RESIN TRANSFER MOLDING) - VERFAHRENS MIT MEHRFACHINJEKTIONSTECHNIK UND RESIN-TRANSFER-MOULDING-VERFAHREN**

(30) Priorität: 30.10.2024 DE 102024131622
(71) Anmelder: 1C Composite Engineering GmbH, 56589 Niederbreitbach (DE)
(72) Erfinder: Krämer, Dirk, 56589 Niederbreitbach (DE)
(74) Vertreter: Rumrich, Gabriele

(57) **Zusammenfassung**

Die Erfindung betrifft ein System zur Durchführung eines RTM (Resin Transfer Molding) - Verfahrens mit Mehrfachinjektionstechnik und ein diesbezügliches Verfahren, mit einem Formwerkzeug (W), welches eine obere Formhälfte (2) und eine untere Formhälfte (3) mit einer dazwischen ausgebildeten Formkavität (13) zum Einlegen einer Preform (10) aufweist, dadurch gekennzeichnet, dass das System eine Hauptsteuereinheit (1) und mehrere Injektionseinheiten (4.1, 4.2.... 4.n) zum Zuführen von Harzgemisch in die Formkavität (13) aufweist und von den Injektionseinheiten (4.1, 4.2.... 4.n) mehrere Injektionspunkte (P1, P2.... Pn) in das Formwerkzeug (W) und in dessen Formenhohlraum (13) führen, wobei in das Formwerkzeug (W) und/oder die Injektionseinheiten (4.1, 4.2.... 4.n) Sensoren zur Überwachung von Prozessparametern integriert sind und die Sensoren mit der Hauptsteuereinheit (1) kommunizieren. Verfahrensgemäß erfolgt mit den mehreren Injektionseinheiten (4.1, 4.2 ... 4.n) über mehrere Injektionspunkte (P1, P2 ... Pn) ein Mehrfachinjektions-RTM-Prozess in das Formwerkzeug (W), welcher über die Hauptsteuereinheit (1) gesteuert wird, wobei eine Koordination zwischen der Hauptsteuereinheit (1), den einzelnen Injektionseinheiten (4.1, 4.2 ... 4.n) und den Sensoren im und am Formwerkzeug (W) und/oder den Injektionseinheiten (4.1, 4.2 ... 4.n) während des gesamten Mehrfachinjektions-RTM-Prozesses einschließlich eines Aushärtungsprozesses erfolgt.

## Beschreibung

Die Erfindung betrifft ein System zur Durchführung eines RTM (Resin Transfer Molding) - Verfahrens und ein Resin-Transfer-Moulding-Verfahren nach dem Oberbegriff des ersten und siebzehnten Patentanspruchs.

Das RTM-Verfahren (Resin-Transfer-Molding-Verfahren) ist ein Fertigungsverfahren zur Herstellung von Faserverbundwerkstoff-Bauteilen mit hervorragenden Festigkeitseigenschaften bei gleichzeitig niedrigem Gewicht. Es ermöglicht die Herstellung komplexer Geometrien mit hoher Präzision und sehr guter Reproduzierbarkeit.

Beim RTM-Verfahren werden trockene Verstärkungsmaterialien wie Glas- oder Kohlenstofffasern in eine Formkavität eingebracht. Die Form wird dann geschlossen, wodurch eine abgedichtete Umgebung entsteht. Anschließend wird Harz unter Druck in die Kavität eingespritzt, wodurch die Verstärkungsmaterialien mit Harz getränkt werden und die Form gefüllt wird. Das Harz kann Zusatzstoffe wie Katalysatoren oder Härter enthalten, um Aushärtungs- oder Vernetzungsreaktionen einzuleiten. Die Form wird in der Regel evakuiert und beheizt, um das Fließverhalten des Harzes zu verbessern (Viskositätsminderung) und den Aushärtungsprozess zu initiieren bzw. zu beschleunigen. Sobald das Harz die Verstärkungsmaterialien vollständig imprägniert hat und ausgehärtet ist, wird die Form geöffnet und das fertige Bauteil entnommen.

Bekannterweise wird das RTM-Verfahren bei niedrigem Druck (bis etwa 3 bar) und niedriger Temperatur (bis etwa 70°C) betrieben, was es für die Herstellung von Verbundstoffteilen besonders geeignet macht.

Beim ebenfalls bekannten Hochdruck-RTM-verfahren wird ein höherer Druck (bis etwa 40 bar) verwendet, der einen schnelleren Harzfluss ermöglicht. Hierbei besteht jedoch die Gefahr, dass sich die Verstärkungsfasern aufgrund des erhöhten Injektionsdrucks unzulässig verschieben und die Faserorientierung im Bauteil nicht mit der geplanten Spezifikation übereinstimmt. Dieser Mechanismus erschwert die Herstellung großformatiger Bauteile mit hohen Faser-Volumen-Anteilen im RTM-Verfahren. Typischerweise werden Harz- und Werkzeugtemperatur für kürzere Verarbeitungszeiten erhöht. Dies führt zu einer geringeren Viskosität und damit zu einer höheren Fließgeschwindigkeit des Harzes. Durch die Erwärmung verringert sich auch die Zeit, die für den Aushärtungsprozess benötigt wird.

Wird bei der Herstellung von großen Bauteilen mit langen Harzfließwegen die Harztemperatur über einen längeren Zeitraum erhöht, kann die Aushärtereaktion zu schnell initiiert werden. Aufgrund der Gelierung des Harzes bei Beginn der Aushärtereaktion wird der Harzfluss erschwert und kann vollständig zum Erliegen kommen, bevor die gesamte Form gefüllt ist. Die Verstärkungsfasern werden unzureichend getränkt und das Bauteil erreicht nicht die geforderten Eigenschaften.

Die Harzzuführung erfolgt typischerweise mit Hilfe einer Injektions-Vorrichtung, mit der das Harz (im korrekten Mischungsverhältnis mit dem bei 2K-Systemen erforderlichen Härter) über einen Mischkopf in das Formwerkzeug injiziert wird.

Die meisten der derzeit genutzten RTM-Anlagen verwenden eine Injektion-Vorrichtung mit einem Injektionsanschluss (Einpunkt-Injektionssystem).

Bei der Herstellung großer Bauteile sorgt das für eine eingeschränkte Designflexibilität und es besteht ein höheres Risiko für eine ungleichmäßige Harzverteilung, von Trockenstellen und einer höheren Zykluszeit.

Vor allem in der Luft- und Raumfahrt, wo die Anforderungen an leichte, hochfeste Bauteile besonders hoch sind, stoßen herkömmliche RTM-Verfahren auf Probleme bei der Gewährleistung einer gleichmäßigen Produktion von Verbundwerkstoffteilen.

Das RTM-Verfahren wird seit mehreren Jahren zur Herstellung von Integralbauteilen verwendet. Es ist ein Harzinfusionsverfahren und wird meist zur Herstellung von Faserverbundbauteilen verwendet. Laut Wikipedia ist das Resin Transfer Moulding oder Resin Transfer Molding (RTM) ein Verfahren zur Herstellung von Formteilen aus Duroplasten und Elastomeren. Im Vergleich zum Pressen wird hierbei die Formmasse mittels Kolben von einer meist beheizten Vorkammer oder Verteilerkanale in das Formnest eingespritzt, worin sie unter Warme und Druck aushärtet.

Als Formmasse können Formaldehydharze (PF, MF usw.) und Reaktionsharze (UP, EP) mit kleinen Füllstoffpartikeln und Elastomere verwendet werden. Zu Beginn eines Zyklus befindet sich eine vorplastifizierte und dosierte Formmasse in einer Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und - temperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Danach erfolgt die Reinigung des Werkzeugs und ein neuer Zyklus kann beginnen. Die beim Einpressen und Nachpressen benötigte Formmasse sollte dabei immer größer als das endgültige Formteil sein, damit das Werkzeug vollständig befüllt wird. Somit wird garantiert, dass das Formteil vollständig ausgebildet ist und keine Luft eingepresst wird. Die dabei in der Vorkammer überschüssige, zurückgebliebene Formmasse, auch als Restkuchen bezeichnet, muss vor dem Beginn des neuen Zyklus entfernt werden und durch neue Formmasse ersetzt werden.

Um auch lange Fasern oder Faserhalbzeuge (Prewovens/Preform/Preforming) zu verarbeiten, werden diese zuvor in das Werkzeug eingelegt und mit der Formmasse umspritzt. Um Lufteinschlüsse zu vermeiden, wird meist zusätzlich die Kavität (Formhohlraum) evakuiert. Als Injektionsharze werden meist Harze verwendet, die eine niedrige Viskosität besitzen. Dadurch bleibt der Strömungswiderstand beim Durchströmen der Form gering und es sind kleinere Druckdifferenzen zum Füllen notwendig. Reaktionsharze für RTM-Verfahren werden als spezielle Injektionsharze angeboten, die aus einer Harz- und Härterkomponente bestehen. Während des Injektionsprozesses fließt beim RTM-Verfahren Harz mit der entsprechenden Fließgeschwindigkeit durch den Formenhohlraum, füllt diesen aus, benetzt die eingelegten Materialien und tritt aus dem Werkzeug aus.

In der Patentliteratur wird beispielsweise in der Druckschrift DE 600 11 752 T2 A ein Verfahren zur Herstellung von Strukturteilen aus Composite-Material nach dem Harzinjektions-Verfahren und eine entsprechende Vorrichtung beschrieben. Mit dieser Lösung wird die Vakuumabdichtung der geschlossenen Form vor dem Harztransfer verifiziert und es werden ausgehärtete Harzreste, die nicht für das Bauteil verwendet werden, aus einem Behälter gelöst, der zur zusätzlichen Konditionierung und zusätzlichen Zufuhr von Harz verwendet wird. Weiterhin wird der Druck zur Bestimmung der Dichtheit der Form gemessen und es ist eine Temperatursteuervorrichtung vorgesehen.

Weiterhin ist aus der Druckschrift DE 10 2007 060 739 A1 ein Verfahren und ein Formwerkzeug zur Herstellung von Faserverbundbauteilen bekannt, bei welchem der Verlauf der Fließfront mit zu der Formenkavitat gewandten Drucksensoren erfasst wird und in Abhängigkeit von der Fließfront das Kühlen im Kantenbereich variiert wird.

In DE 10 2009 010 692 A1 wird unter anderem eine Vorrichtung und ein Verfahren zum Durchführen eines RTM-Verfahrens beschrieben, wobei die Vorrichtung eine Injektionsanlage und ein mit einem Formenhohlraum versehenes schließbares Werkzeug aufweist und die Injektionsanlage an das Werkzeug gekoppelt ist, derart, dass ein Injektionsharz in das Werkzeug einbringbar ist, wobei das Werkzeug wenigstens einen mittels einer Schließeinrichtung schließbaren und mit dem Formenhohlraum verbundenen Harzausgang aufweist, aus welchem nach dem Füllen der Form Injektionsharz austreten kann. Mit einer Prozesssensorik ist das Faserverbundbauteil während des Herstellungsprozesses überwachbar, wobei die Prozesssensorik steuernd mit der Prozessstelleinrichtung gekoppelt ist. In dem Werkzeug ist in einem transparenten Bereich eine Kamera vorgesehen, die ein Bild des entstehenden Faserverbundbauteils aufnimmt. Mit entsprechenden Sensoren werden weiterhin der Druck und die Temperatur im Werkzeug erfasst. Weiterhin ist ein Mischkopf vorgesehen, in welchem die Komponenten unmittelbar vor deren Injizieren gemischt werden. Bei dieser Lösung ist keine Möglichkeit vorhanden, den Harzaustritt aus der Form zu erkennen, wenn diese gefüllt ist.

Aus der Druckschrift DE 199 22 850 C1 ist eine Vorrichtung zur Herstellung von Bauelementen aus Faserverbundwerkstoffen bekannt, wobei eine Form mit Anschlussmitteln zur Injektion eines Harzes und zur Drucksenke versehen ist, bestehend aus zusammenwirkenden Formteilen, wobei zumindest ein Formteil formbeständig entsprechend der Kontur der äußeren Oberfläche des Bauteils ausgebildet ist und zwischen den zusammenwirkenden Formteilen eine Fasergelegegarnitur einlegbar ist. Das Unterteil der Form ist die Eintrittseinrichtung des Harzes, wozu entsprechende Kanäle vorgesehen sind. An jedem Kanal ist eingangsseitig und ausgangsseitig ein Anschlussmittel in Form eines Durchflussventils vorgesehen, welches mit einer Steuerung mittels Steuerleitungen verbunden ist. Damit kann eine einzelne Leitung geöffnet oder geschlossen werden, aber es ist ebenfalls nicht möglich, den Harzaustritt aus der Form entsprechend zu detektieren.

Aus der Druckschrift EP 2 588 297 B1 ist eine Vorrichtung zur Durchführung eines Resin-Transfer-Moulding (RTM) Verfahrens bekannt, bei dem der Harzaustritt detektierbar ist. Dazu ist ein Drucksensor integriert und der Kunststoffschlauch oder die Leitung am Harzaustritt zumindest bereichsweise durchsichtig und der Harzaustritt ist mittels eines kapazitiven Sensors detektierbar. Bei Überschreiten eines vorgegebenen Drucks öffnet die geschlossene Harzflussschließeinheit wieder.

Es ist weiterhin bekannt, Fließfronten des Harzgemisches zu verfolgen.

Bei der Druckschrift DE 10 2017 122 585 A1 werden zwei Injektionseinheiten verwendet, die zu einem Mischbereich führen und das darin gemischte Material wird von dort in die Form über eine einzige Zuführung und somit über nur einen Injektionspunkt eingebracht.

Auch die Lösung nach DE 10 2011 051 391 A1 verwendet nur eine Injektionseinheit von der aus nur ein Injektionspunkt in das Werkzeug führt.

Eine Lösung zur Mehrpunktinjektion ist beispielsweise aus der Druckschrift KR 10 2017 001 857 A bekannt. Bei dieser Lösung sind im Werkzeug Sensoreinheiten angeordnet, die einen Temperatursensor, einen Drucksensor und einen Wirbelstromsensor umfassen. Es werden Druck und Temperatur gemessen, um zu überprüfen, ob die Füllmenge des Polyurethanharzes erreicht ist. Darüber hinaus kann der Wirbelstromsensor zur Messung der Öffnungszeit der Form verwendet werden, indem gemessen wird, ob das flüssige Harz nach Abschluss des Einfüllens des Polyurethan (PU)-Materials ausgehärtet ist und in eine feste Phase übergeht.

Aus der Druckschrift JP 2011-169010 A ist ebenfalls ein RTM-Verfahren mit Mehrfachinjektion bekannt. Dabei wird in Bereichen mit einer höheren Dichte des eingelegten Teils die Anordnungsdichte der Harzeinlässe erhöht. Dadurch ist die injizierte Menge an Harz größer, was zu einer gleichmäßigeren Qualität führen soll, die jedoch nicht zuverlässig erzielbar ist

Eine weitere Druckschrift zu einem RTM-Verfahren mit mehrfach-Injektion ist die WO 2002/096 618 A1. Es sind hier mehrere Drucksensoren zur Drucküberwachung vorgesehen. Eine Hauptsteuereinheit kommuniziert mit den Drucksensoren. Es wird jedoch nur EINE Injektionseinheit vorgesehen, von welcher aus hier mehrere Injektionspunkte "bedient" werden. Daher ist es nicht möglich den Harzfluss der beiden Injektionspunkte bei der D1 gezielt zu einem Entlüftungspunkt oder Harzauslass zu leiten. Die Einspritzöffnungen sind nacheinander vom Umfang der Form nach innen in Richtung der mittleren Austrittsöffnung angeordnet. Das Harz wird zunächst in die äußersten Einspritzpunkte eingespritzt. Wenn ein Ventil einen positiven Anstieg des Werkzeuginnendrucks feststellt, wird der Steuerdruck an ein Umleitungsventil, um den anfänglichen Umfangsinjektionspunkt zu schließen und einen oder mehrere nachfolgende innere Injektionspunkte zu öffnen, um den Harzfluss zur Mitte zu fördern, während ein negativer Werkzeuginnendruck aufrechterhalten wird. Somit wird der Harzfluss durch das Öffnen eines oder mehrerer Injektionspunkte in Richtung zur Mitte des Werkzeuges geleitet.

Alle vorgenannten Lösungen weisen den Nachteil auf, dass insbesondere sehr große Integralbauteile, wie sie beispielsweise für Flugzeuge, Windkraftanlagen und dergleichen benötigt werden, beim Mehrfachinjizieren nicht in hoher Qualität herstellbar sind.

Die Aufgabe der Erfindung betrifft daher die Schaffung eines Systems zur Durchführung eines RTM (Resin-Transfer-Molding-Verfahrens) und ein Resin-Transfer-Moulding-Verfahren mit Mehrfachinjektionstechnik, welches eine zuverlässige Durchdringung des in eine Form eingelegten Halbzeugs mit dem injizierten Harzgemisch/Harz-Härter-Gemisch und eine hohe Qualität der damit hergestellten Teile mit Mehrfachinjektion, d.h. Injektion des Harzgemisches an mehreren Injektionspunkten des Werkzeuges gewährleistet.

Diese Aufgabe wird mit den Merkmalen des ersten und sechzehnten Patentanspruchs gelöst.

Vorteilhafte Ausgestaltungen ergeben sich aus den Unteransprüchen.

Das erfindungsgemäße System (bzw. die erfindungsgemäße Anlage) zur Durchführung eines Resin-Transfer-Moulding-Verfahrens (RTM) mit einem Formwerkzeug, welches eine obere Formhälfte und eine untere Formhälfte mit einer dazwischen ausgebildeten Formkavität zum Einlegen einer Preform aufweist, ist mit einer Hauptsteuereinheit ausgestattet und weist mehrere Injektionseinheiten zum Zuführen von Harzgemisch in die Formkavität auf, wobei von den Injektionseinheiten mehrere Injektionspunkte in das Formwerkzeug und in dessen Formenhohlraum führen und in das Formwerkzeug und/oder die Injektionseinheiten Sensoren zur Überwachung von Prozessparametern integriert sind und die Sensoren mit der Hauptsteuereinheit kommunizieren.

Über die Hauptsteuereinheit werden die Injektionseinheiten gesteuert und deren Druck und/oder Volumen des injizierten Harzgemisches abhängig von Parametern im Formwerkzeug geändert.

Dabei sind in das Formwerkzeug Sensoren zur Erkennung des Fließverhaltens des injizierten Harzgemisches integriert. Dies sind Fließerkennungssensoren in Form von Druck-, Optische- und/oder Ultraschallsensoren. Dabei haben sich nach dem Stand der Technik Ultraschallsensoren zur Erkennung der Fließfronten bereits bewährt.

Weiterhin ist an mindestens einem Harzauslass des Formwerkzeuges mindestens ein kapazitiver Sensor an einem Entlüftungsschlauch angeordnet ist.

Der Kapazitive Sensor dient zur Erfassung von Harzaustritt am Harzauslass und zur Erkennung von Luftblasen im austretenden Harzgemisch.

Die Hauptsteuereinheit ist als "Gehirn" der Anlage (Master) bzw. des Systems mit den Injektionseinheiten zur Übertragung von Befehlen gekoppelt.

Dabei übertragen die in das Formwerkzeug integrierten Sensoren die aufgenommenen Daten an die Hauptsteuereinheit in Echtzeit.

Mit der Hauptsteuereinheit sind auf Basis der in Echtzeit kontinuierlich übertragenen Daten kritische Daten anzeigbar und insbesondere auch der Status eines RTM-Prozesses anzeigbar.

Mit der Hauptsteuereinheit sind die Daten aus dem Formwerkzeug analysierbar, um die Leistung jeder einzelnen Injektionseinheit und die Harzverteilung innerhalb der Form zu bewerten. Mit der Hauptsteuereinheit sind die tatsächlichen Prozessparameter mit vordefinierten Zielen oder Sollwerten vergleichbar, insbesondere um festzustellen, ob Anpassungen erforderlich sind.

Durch die Hauptsteuergerät werden bei erforderlichen Anpassungen geänderte Parameter an jede einzelne Injektionseinheit übertragen, so dass in jeder Injektionseinheit diese Einstellungen unabhängig voneinander umsetzbar sind.

Es können beispielsweise als zu verändernde Parameter der Druck, das Volumen, das Mischungsverhältnis von Harz/Härter, die Temperatur des Harzgemisches und natürlich auch eine Kombination der vorgenannten Parameter durch entsprechende Befehle der Hauptsteuereinheit verändert werden.

Weiterhin sind, wie bereits vorgenannt beschrieben, durch die mit den Sensoren an die Hauptsteuereinheit übermittelten Daten die Position von Fließfronten bestimmbar.

Durch die Erkennung von Harzfließfronten durch die Hauptsteuereinheit ist ermittelbar, an welchen Stellen sich Harzfließfronten treffen werden.

Ein Wesentlicher Vorteil des Systems (bzw. der Anlage) besteht nun darin, dass es erstmalig möglich ist, über die Hauptsteuereinheit einen Bereich des Zusammentreffens der Harzfließfronten zu einem Harzauslass und/oder einer Entlüftungsöffnung des Formwerkzeuges zu leiten.

Dies ist beispielsweise dadurch möglich, dass die Geschwindigkeit von Fließfronten mittels Änderung des Injektionsdrucks und/oder Änderung der Durchflussmengen der einzelnen Injektionseinheiten veränderbar ist, um mehrere Fließfronten zu einem Harzauslass und/oder einer Entlüftungsöffnung des Formwerkzeuges leiten.

Ausgangsseitig ist am Harzauslass oder einem dem Harzauslass nachgeordneten Bereich (Schlauch) mindestens einen Sensor zur Erkennung von Luftblasen im Harzgemisch vorhanden. Als Sensor zur Erkennung von Luftblasen wird bevorzugt ein kapazitiver Sensor und/oder ein optischer Sensor verwendet.

Der Bereich der Anordnung des Sensors bzw. der Sensoren zur Erkennung von Luftblasen ist dabei in einem mit dem Harzgemisch durchflossenen Bereich als durchsichtiger Bereich ausgebildet, wobei außen am durchsichtigen Bereich der kapazitive Sensor und/oder der optische Sensor angeordnet ist/sind.

Der/die Sensor/en zur Erkennung von Luftblasen sind mit der Hauptsteuereinheit verbunden sind und übermitteln an diese Informationen über die Menge der im Harzgemisch vorhandenen Luftblasen, worauf mit der Hauptsteuereinheit ein Signal an die Harzverschließeinheit/en übermittelbar ist, um die Harzauslässe automatisch zu schließen wenn sich keine oder nahezu keine Luftblasen in dem austretenden Harz befinden oder zu öffnen bzw. offen zu halten, wenn noch Luftblasen in dem Harzgemisch vorhanden sind.

Weiterhin ist die Hauptsteuerung mit dem Heizgerät des Formwerkzeuges und/oder den Heizgeräten Vorratsbehälters und/oder Leitungen, durch welche Harz-Härtergemisch fließt, zur Überwachung und Regelung einer Anfahrkurve und zur Erzielung einer festgelegten Soll-Temperatur gekoppelt. In der Hauptsteuerung wird die eingebrachte Energie und das resultierende Ergebnis daraus abgespeichert und es wird selbständig die höhere Umlauftemperatur des Heizmediums gesteuert, die für das Erreichen der Betriebstemperatur benötigt wird. Hiermit wird auch der Leistungsverlust durch die Zuleitungen und die Abwärme des Werkzeuges berücksichtigt. Eine zu hohe Energieeinbringung wird durch eine prozentuale Begrenzung der Wunschtemperatur verhindert.

Am Formwerkzeug ist ausgangsseitig beispielsweise in oder nach einem oder mehreren Harzauslässen mindestens ein Entlüftungsschlauch angeordnet, durch welchen die in dem Harzgemisch vorhandene Luft entweichen kann. Mit mindestens einem kapazitiven und/oder optischen Sensors ist ein Füllungsgrad des Entlüftungsschlauchs überwachbar und/oder eine Luftblasenmenge und/oder eine Luftblasengröße in dem Harzgemisch ermittelbar sind. Diese Kennwerte werden dann in der Anlagensteuerung für den Bediener visualisiert.

Der/die Sensoren zur Erkennung des Füllungsgrades des Entlüftungsschlauchs und/oder der Luftblasenmenge und/oder eine Luftblasengröße stehen mit dem Hauptsteuergerät in Verbindung und es sind die aktuelle Luftblasenmenge und/oder Luftblasengröße an dem mindestens einem Harzausauslass bestimmbar. Dieser Kennwert dient der Steuerungslogik zum automatischen Öffnen und Schließen der Harzausgänge (Harzflussschließeinheit) zwecks einer automatisierten Entlüftung des zu injizierenden Bauteils. Durch den Abgleich mit einem vordefinierten max. Wert des Befüllzustandes der Entlüftungsschläuche, wird das Bauteil automatisch solange injiziert bzw. entlüftet bis der max. Luftblasengrenzwert erreicht ist.

Das erfindungsgemäße Verfahren beinhaltet ein kontinuierliches Echtzeit-Kommunikationssystem für den Mehrfachinjektions-RTM-Prozess

Das Mehrfachinjektions-RTM-System sorgt damit für eine effiziente Koordination zwischen der Hauptsteuereinheit, den einzelnen Injektionseinheiten und den Sensoren im und am Formwerkzeug während des gesamten Mehrfachinjektions-RTM-Prozesses, einschließlich des Injektions- und Aushärtungsprozesses:
∘ Die Hauptsteuereinheit dient als "Gehirn" der Anlage (Master) und überträgt nahtlos Befehle an die einzelnen Injektionseinheiten, die Ausführer der Befehle (Slave) fungieren.
∘ Alle Sensoren, die in das Formwerkzeug eingebettet sind, übertragen kontinuierlich in Echtzeit kritische Daten an die Hauptsteuereinheit und geben Einblick in den Status und die Dynamik des RTM-Prozesses.
∘ Die Hauptsteuereinheit analysiert die mittels der Sensoren übermittelten Daten aus dem Formwerkzeug, um die Leistung bzw. die Parameter jeder einzelnen Injektionseinheit und die Harzverteilung innerhalb des Formwerkzeuges/ in dem Formenholraum mit dem der eingelegten Preform zu bewerten, und vergleicht die tatsächlichen Prozessparameter mit vordefinierten Zielen oder Sollwerten, die in der Hauptsteuereinheit gespeichert sind, um festzustellen, ob Anpassungen erforderlich sind.
∘ Basierend auf der Analyse der Daten der Sensoren kommuniziert das Hauptsteuergerät die geänderten Parameter an jede einzelne Injektionseinheit, so dass jede Injektionseinheit diese Einstellungen unabhängig voneinander erhalten und umsetzen kann.

Ein weiterer erfindungsgemäßer Aspekt des Mehrfachinjektions-RTM-Verfahrens und des Systems bzw. der Anlage zur Durchführung besteht in dem Erkennen und Lenken von Harzfließfronten im geschlossenen Werkzeug
∘ Durch die vorgenannt beschriebene Echtzeit-Kommunikation zwischen den in dem Formwerkzeug verwendeten Sensoren und der Hauptsteuereinheit sind die Position der Fließfronten erkennbar. Die Erkennung der Fließfronten erfolgt über die Kombination, der an die Hauptsteuereinheit übermittelten Daten der Werkzeugsensoren (Fließerkennungssensoren (Druck-, Optische- und/oder Ultraschallsensoren) sowie den kapazitiven und/oder optischen Sensor am Entlüftungsschlauch.
∘ Durch die Erkennung von Harzfließfronten kann die Hauptsteuereinheit ermitteln/berechnen, an welchen Stellen sich Harzfließfronten des Hatzgemisches, welches über die einzelnen Injektionspunkte in das Werkzeug injiziert wurde, treffen werden.
∘ Wenn ermittelt wird, dass sich Fließfronten nicht im Bereich eines Harzaustritts treffen werden, werden die Fließfronten in Richtung bzw. zum Harzaustritt gelenkt.
∘ Dadurch wird der Bereich des Zusammentreffens der Fließfronten zu einem Entlüftungspunkt - bevorzugt einem Harzaustritt geleitet werden.

Es erfolgt somit erstmalig eine automatische Steuerung des Injektionsprozesses einschließlich der Steuerung der Harzfließfronten im geschlossenen Werkzeug durch die Hauptsteuereinheit. Dabei werden folgende Verfahrensschritte durchgeführt:
∘ Die Sensoren und deren Kommunikation mit der Hauptsteuereinheit und wiederum deren Kommunikation mit allen Injektionseinheiten wird implementiert, um eine gleichmäßige Harzverteilung über die gesamte Preform während der sequentiellen Injektion oder der Injektion mit variablem Druck zu erreichen, was in der geschlossenen Form nicht beobachtet werden kann.
∘ Das System analysiert die Daten der Werkzeugsensoren in Echtzeit und berechnet die erforderliche Injektionsmenge der einzelnen Injektionseinheiten an den zugeordneten Injektionspunkten, um die Fließfronten zu steuern. Es werden die Geschwindigkeiten der Fließfronten angepasst, indem es den Injektionsdruck und/oder die Durchflussmengen der einzelnen Injektionseinheiten ändert, um die Fließfronten zu den jeweiligen Entlüftungspunkten (Harzauslässen) zu leiten.
∘ Durch die Möglichkeit, bei sehr großen Bauteilen mehrere Injektionspunkte durch mehrere Injektionseinheiten zu nutzen und zu steuern, können die Fließwege verkürzt und damit der Werkzeuginnendruck im Bereich des Injektionspunktes deutlich reduziert werden.
∘ Die Injektionszeit wird verkürzt. Um jedoch zu verhindern, dass bei einer Kollision mehrerer Fließfronten Bereiche mit einem Einschluss oder einem zu geringen Harzgehalt durch eine Spülung entstehen, werden die Fließfronten aktiv nachgeregelt.

Ein weiterer wesentlicher Aspekt des erfindungsgemäßen Verfahrens und des Systems besteht in der Detektion von Luftblasen an den Harzauslässen:
∘ Das Mehrfachinjektions-RTM-System kann Luftblasen im Harzsystem erkennen, die aus den Harzauslässen austreten, indem es kapazitive Sensoren und/oder optische Sensoren verwendet. Darüber hinaus sind mit diesen Sensoren die Menge der im Harzsystem vorhandenen Luftblasen messen.
∘ Die Erkennung der Luftblasen und die Messung der Luftblasenmenge dienen dazu, sicherzustellen, dass der Injektions- oder Spülvorgang erst dann abgeschlossen ist, wenn das Bauteil vollständig gefüllt ist und die Grenzwerte des Luftvolumens im Harz-Härter-Gemisch vor Abschluss der Injektion nicht überschritten wurden.

Ein weiter Vorteil der erfindungsgemäßen Lösung besteht in der automatischen Entlüftung der Luftblasen am Harzauslass bzw. den Harzauslässen. Dies wird nachfolgend beschrieben:
∘ Auf der Grundlage der Detektion der Luftblasen mittels der kapazitiven Sensoren und/oder optischen Sensoren an dem/den Harzauslässen werden Informationen über die Menge der im Harzgemisch vorhandenen Luftblasen an die Hauptsteuereinheit weitergeleitet.
∘ Basierend auf diesen Informationen kann das RTM-System mit Mehrfachinjektion die Prozessparameter einzelner Injektionseinheiten oder mehrerer Injektionseinheiten gleichzeitig ändern, um sicherzustellen, dass keine Luftblasen in der Form vorhanden sind.
∘ Nach Änderung der Prozessparameter der Injektionseinheiten kann das RTM-System mit Mehrfachinjektion die Änderungen auf Basis der Daten von kapazitiven Sensoren und/oder optischen Sensoren analysieren und ein Signal an die Harzverschließeinheit senden, um die Harzauslässe automatisch zu schließen und zu öffnen.

Verfahrensgemäß erfolgt weiterhin eine automatische Reduzierung des Werkzeugdrucks durch eine Steuerungslogik, was nachfolgend beschrieben wird:
∘ Der Innendruck im Werkzeug und der Druck an den Injektionspunkten werden durch das Mehrfachinjektions-RTM-System mittels der im Werkzeug und am Mischkopf angeordneten Drucksensoren kontinuierlich überwacht. Das Mehrfachinjektions-RTM-System kann die Bereiche mit zu hohem Druck (über dem definierten Grenzwert) selbständig erkennen und einen Harzauslass in diesem Bereich durch Kommunikation mit der Harzschließeinheit oder den Steuerparametern der Injektionseinheiten öffnen, bis der Druck wieder im Grenzbereich liegt.
∘ Es werden bei dieser Variante ein oder mehrere Harzauslässe geöffnet, um den Innendruck im Formwerkzeug auf einen vorgegebenen Maximalwert oder darunter zu reduzieren.
∘ Dies Ist ähnlich der Beschreibung der variablen Drucksteuerung. Bei der variablen Drucksteuerung wird der Druck über die Pumpenleistung der Pumpen zur Harzinjektion gesteuert. Über eine Reduzierung des Pumpendrucks kann ebenfalls der Innendruck reduziert werden.
∘ Alternativ können bei einem zu hohen Werkzeuginnendruck sowohl die Harzauslässe geöffnet werden und der Pumpendruck reduziert werden, um mit dem Werkzeuginnendruck unter einen vorgegebenen Maximaldruck zu gelangen.

Bei Erreichen der in der Hauptsteuerung festgelegten Grenzwerte wird bevorzugt erst das Fördervolumen angeglichen und stetig reduziert. Die jeweiligen Harzauslässe, die in dem Bereich der Druckauswerteeinheit des Formwerkzeuges W sitzen, können alternativ oder zusätzlich geöffnet werden, wenn das Reduzieren des Forminnendrucks durch das Reduzieren des Fördervolumen nicht ausreichend war. Dadurch erfolgt eine automatische Reduzierung des Forminnendrucks durch die Steuerungslogik der Hauptsteuerung.

Die Erfindung wird nachfolgend anhand von Ausführungsbeispielen und zugehörigen Zeichnungen näher erläutert. Es zeigen:
- Figur 1: die Prinzipdarstellung des Systems (bzw. der Anlage) mit einem Formwerkzeug mit einem eingelegten Faserhalbzeug gleichmäßiger Dicke,
- Figur 2: die Prinzipdarstellung eines Formwerkzeugs mit einem eingelegten Faserhalbzeug unterschiedlicher Dicke,
- Figur 3: eine Darstellung der Komponenten für die Implementierung des Mehrfachinjektions-RTM-Prozesses,
- Figur 4: eine Prinzipdarstellung der Hauptsteuereinheit und einer der Injektionseinheiten für das Mehrfachinjektions-RTM-System,
- Figur 5: eine sehr vereinfachte Darstellung von Fließfronten bei sechs Injektionspunkten P1 bis P6.

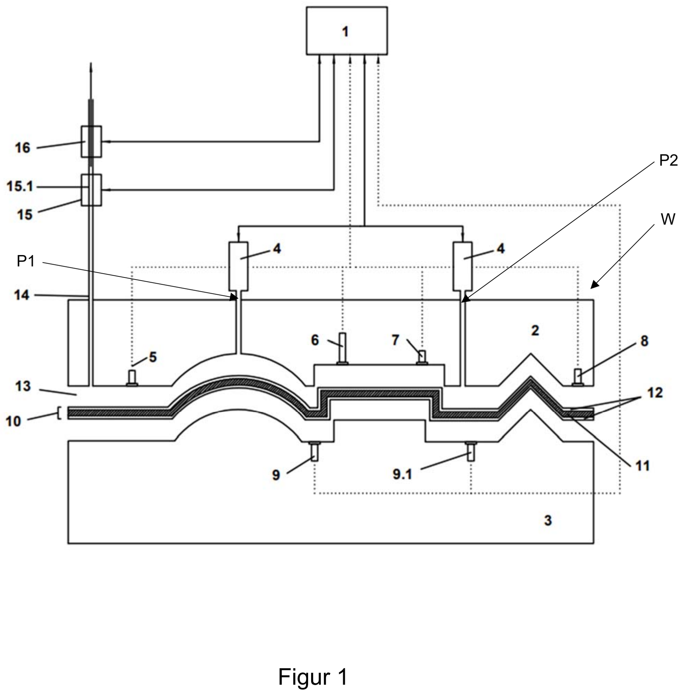

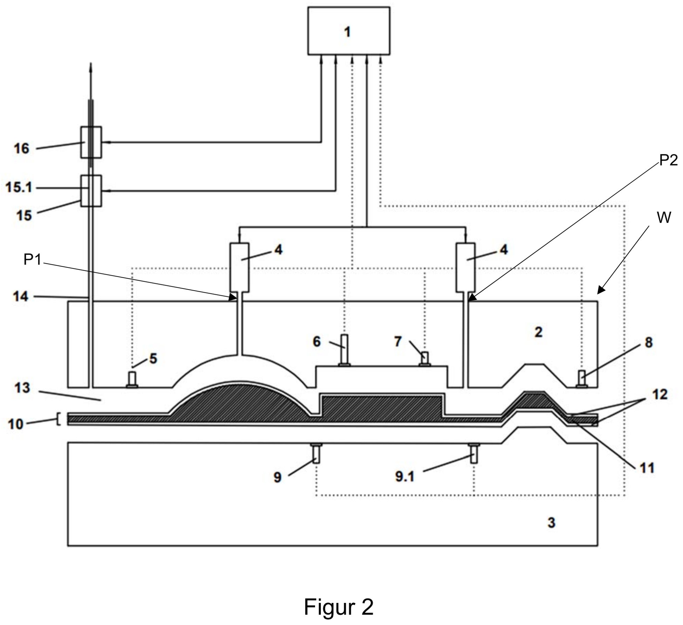

Die **Figuren 1** **und** **2** zeigen eine Darstellung eines verschließbaren Formwerkzeuges W, welches zur Herstellung von Verbundteilen aus einem Halbzeug mit gleichmäßiger Dicke (Figur 1) bzw. unterschiedlicher Schaumkerndicke (Figur 2) verwendet wird. Beide Abbildungen enthalten auch die Sensoren, die für die Echtzeitüberwachung während des Mehrfachinjektions-RTM-Prozesses verwendet werden, darunter Sensoren für Druck, Temperatur, Durchflusserkennung und Aushärtung. Die Anzahl der Sensoren, Harzauslässe und Harzverschließeinheiten kann je nach Prozessanforderungen und Größe der Form angepasst werden. Diese Flexibilität gewährleistet eine optimale Leistung und eine präzise Kontrolle während des Herstellungsprozesses.

Das System weist gem. **Figur 1** **und** **2** System ein Hauptsteuergerät 1 auf.

Das Formwerkzeug W besteht aus einer oberen Formhälfte 2 und einer unteren Formhälfte 3, die hier geöffnet sind.

Zu der Formkavität 13 zwischen den beiden Werkzeughälfte führen hier mindestens zwei voneinander beanstandete Injektionseinheiten 4.4, 4.2, wodurch zwei Injektionspunkte P1 und P2 vorhanden sind, die über nicht bezeichnete Kanäle in der Formkavität 13 führen. Selbstverständlich können auch mehr als zwei Injektionseinheiten und somit mehr als zwei Injektionspunkte vorgesehen werden.

Weiterhin ist es möglich, dass von einer oder mehreren Injektionseinheiten mehr als ein Injektionspunkt zum Formwerkzeug führt.

In das Werkzeug, hier in die obere Formhälfte 2 ist mindestens ein Temperatursensor 5 integriert. Weiterhin sind hier in der oberen Formhälfte 2 mindestens ein Drucksensor 6, mindestens ein Neigungssensor 7 und mindestens ein Abstandssensor 8 integriert. Die untere Formhälfte 3 weist bevorzugt mindestens einen Durchflusssensor 9 und mindestens einen Sensor zur Überwachung der Aushärtung 9.1 auf.

Alle im Formwerkzeug W beispielhaft dargestellten Sensoren können in der oberen und/oder in der unteren Formhälfte 2, 3 integriert sein

Zwischen den beiden Formhälften 2, 3 wurde ein Halbzeug aus Fasermaterial, eine Preform 10, eingelegt, die beispielsweise ein Kernmaterial 11 und äußere Gewebeschichten 12 aufweist, wobei sich die Preform 10 nun in dem Formenhohlraum 13 zwischen den Formhälften 2, 3 befindet.

Es ist weiterhin hier in der oberen Formhälfte 2 ein Harzauslass 14 vorgesehen (wobei auch mehrere Harzauslässe vorhanden sein können), der über einen bevorzugt durchsichtigen Bereich 15.1 mit einem kapazitiven Sensor 15 zu einer Harz-Schließeinheit 16 führt.

Die Injektionseinheiten 4, die Sensoren in Form des/der Temperatursensor/en 5, Drucksensor/en 6, Neigungssensor/en 7, Abstandssensor/en 8, Durchflusssensor/en 9, kapazitive/r Sensor/en und die Harz-Schließeinheit 16 sind mit der Hauptsteuerung 1 verbunden.

Die in den **Figuren 1** **und** **2** ausgebildeten Formhohlräume 13 sind entsprechend der zu erzeugenden Bauteilform ausgebildet.

In **Figur 1** weist das Halbzeug in Form der Preform 10 eine gleichmäßige Dicke auf. In **Figur 2** sind einige nicht bezeichnete Bereiche der Preform 10 dicker und andere flacher ausgeführt.

Vorteilhafterweise bestehen das Hauptsteuergerät 1 und die Injektionseinheiten 4 erstmalig separat aus zwei verschiedenen Komponenten: dem RTM-Steuergerät in Form des Hauptsteuergerätes 1 (control unit) und den RTM-Injektionseinheiten in Form der Injektionseinheiten 4.1, 4.2 bis 4.n.

Zur Herstellung eines Bauteils mit dem erfindungsgemäßen System und dem Verfahren wird eine Preform 10 in den Formenhohlraum des Formwerkzeuges W eingelegt und das Werkzeug geschlossen. Die Sensoren des Formwerkzeugs W werden über Kabel mit der Hauptsteuereinheit verbunden und die Injektionseinheiten 4.1, 4.2...4.n werden ebenfalls mit der Hauptsteuereinheit 1 gekoppelt.

Weiterhin werden die Injektionseinheiten 4.1, 4.2...4.n mit den entsprechenden Injektionspunkten P1, P2...Pn am Formwerkzeug W verbunden.

Die Harzauslässe werden mit dem Formwerkzeug und die Harzverschlusseinheiten mit der Hauptsteuereinheit verbunden.

Zum Injektionsvorgang werden die Harzauslässe an ein Vakuumsystem angeschlossen und es erfolgt der Start der Injektion der Harz + Härter Mischung in die Form von einzelnen Injektionseinheiten, die alle von der Hauptsteuereinheit 1 gesteuert und bedient werden. Dadurch wird die Preform mit Harz-Härter-Mischung getränkt.

Basierend auf der Sensorrückmeldung an den Harzauslässen schließen die Harzverschlusseinheiten die Auslässe sobald die Form / der Formenhohlraum gefüllt ist und die Harz-Härter-Mischung aus einem oder mehreren Harzauslässen austritt.

Die Aushärtereaktion wird durch eine Temperaturerhöhung des Formwerkzeugs initiiert. Die Temperatur wird aufrechterhalten, bis der Aushärtungsprozess abgeschlossen ist.

Nach Abschluss des RTM-Prozesses und der Aushärtung werden alle Verbindungen der Sensoren des Formwerkzeugs W von der Hauptsteuereinheit 1 getrennt Anschließend werden die Injektionseinheiten 4.1, 4.2 ... 4.n von den Injektionspunkten P1, P2 ... Pn getrennt

Das Formwerkzeug W wird geöffnet und das gefertigte Teil kann entnommen werden.

Der insgesamt modulare Aufbau mit der flexiblen Anzahl an Injektionseinheiten 4.1, 4.2 ... 4.n und Injektionspunkten P1, P2 ... Pn ermöglicht eine größere Flexibilität und Anpassungsfähigkeit bei der Herstellung großformatiger Bauteile im RTM-Prozess - erstmalig erfindungsgemäß mit mehreren Injektions-Punkten.

Die Anzahl der erforderlichen Injektionseinheiten 4 und somit der Injektionspunkte kann entsprechend der Produktionsanforderung vom Hersteller der Bauteile gewählt werden.

Im Gegensatz zu Injektions-Systemen mit einem Injektionspunkt arbeitet die erfindungsgemäße Anlage mit mehreren Injektionseinheiten 4.1, 4.2 usw. und mehreren Injektionspunkten P1, P2 usw., wobei vorzugsweise jeder Injektionspunkt P1, P1 usw. von einem eigenen RTM-Injektionsgerät in Form der Injektionseinheit 4.1, 4.2 usw. gesteuert wird.

Die Regelung der verschiedenen Injektionseinheiten 4.1, 4.2 usw. erfolgt über das zentrale Steuergerät 1, das die Informationen aller an das Formwerkzeug angeschlossener Injektionseinheiten 4.1, 4.2 usw. verarbeitet. Somit können die Parameter an jedem Injektionspunkt P.1, P2 usw. separat geregelt werden, aber die Informationen anderer Injektionseinheiten und des Formwerkzeugs W bei der Regelung berücksichtigt werden.

Vorteilhafterweise können daher die Parameter an jedem Injektionspunkt P.1, P2 usw. separat gesteuert werden, abhängig von der Echtzeit-Rückmeldung des Harzflusses (gemessen mit den Sensoren zur Durchflusserkennung 9) und/oder des Injektionsdruck (gemessen mit den Drucksensoren 6) von anderen Injektionseinheiten 4.1, 4.2 ..... 4.n und der Echtzeit-Sensorreaktion der weitern in die Form integrierten Sensoren (siehe vorstehende Beschreibung).

Durch die Schaffung mehrerer Injektionspunkte P2, P2 ... Pn ist ein schneller Formfüllungsprozess realisierbar, der zu kurzen Zykluszeiten und einer besseren Teilequalität führt.

Außerdem lassen sich auf diese Weise große Fließwege realisieren und somit großformatige Bauteile im RTM-Prozess herstellen.

Durch die Integration zusätzlicher Sensortechnologie erreicht das System einen beispiellosen Automatisierungsgrad und gewährleistet ideale Bedingungen durch die kontinuierliche Überwachung von Harzfluss, Temperatur und Druck während des gesamten Prozesses.

Der vernetzte Aufbau ermöglicht einen koordinierten und synchronisierten Betrieb der Injektionseinheiten 4.1, 4.2 ...4.n während des RTM-Prozesses.

Die Hauptsteuereinheit 1 stellt eine Kontrolleinheit dar und fungiert sozusagen als Gehirn, das die Befehle an die Injektionseinheiten 4.1, 4.2 ...4.n erteilt und den Einspritzvorgang koordiniert.

Diese Erfindung verbessert dadurch die Präzision der Harzverteilung und die Gesamtkontrolle während des Herstellungsprozesses erheblich.

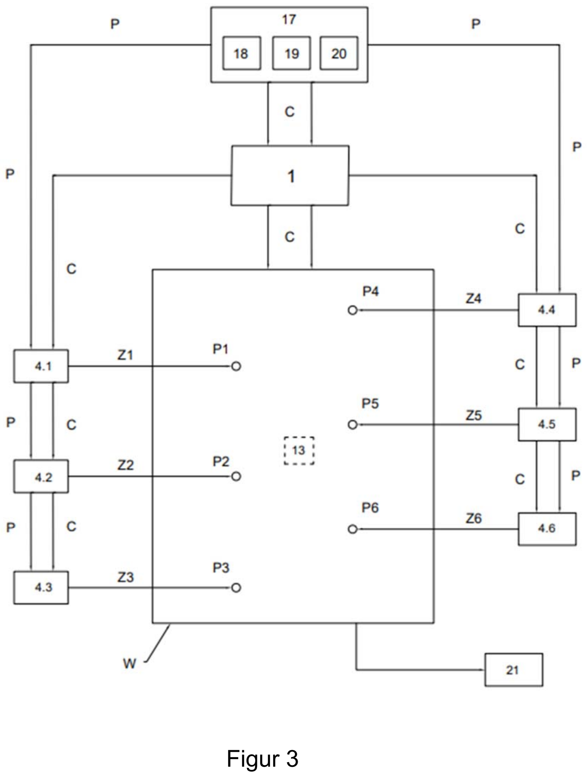

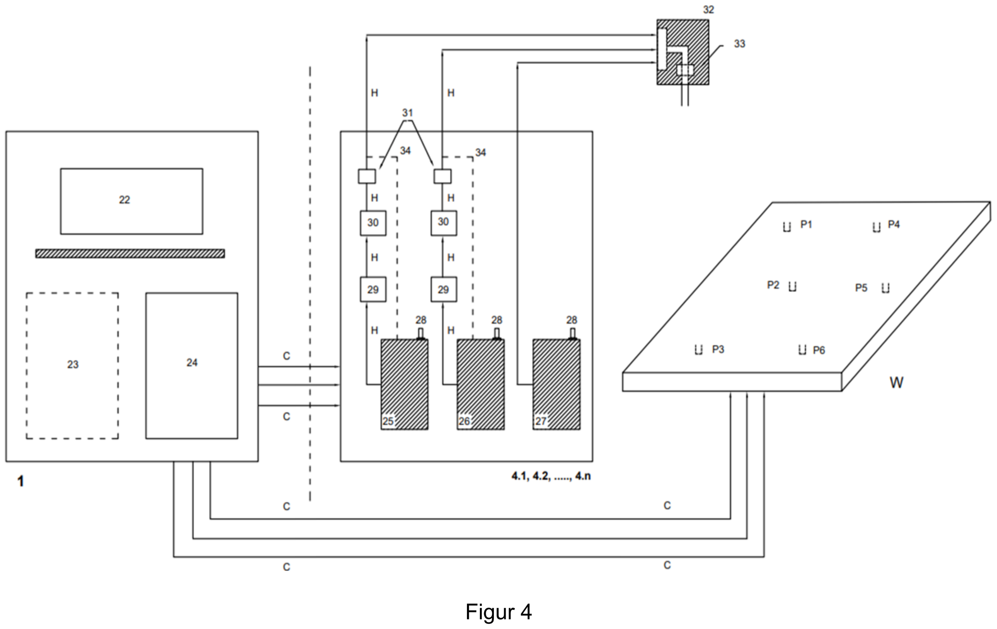

**Figur 3** zeigt eine Darstellung der Komponenten für die Implementierung des Mehrfachinjektions-RTM-Prozesses und **Figur 4** zeigt schematisch die Hauptsteuereinheit 1 und eine der Injektionseinheiten 4 für das Mehrfachinjektions-RTM-System.

Die zentrale Steuereinheit 1 (control-unit) gewährt dem Bediener Zugriff auf alle an das System angeschlossenen Komponenten.

Zu den Hauptbestandteilen der Steuereinheit 1 gehören ein User-Interface mit grafischer Oberfläche, alle Stromkreise, Sensor-Indikatoren und Steuerschalter.

Die Sensorindikatoren werden dabei zur Anzeige des Status und/oder der Leistung der Sensoren verwendet.

Weiterhin werden Sekundärteile in Form von Identifikations-Tags und intelligente LED-Leuchten -zur Anzeige der Prozessstufen des RTM-Verfahrens verwendet. Diese Bestandteile der Steuereinheit 1 sind nicht dargestellt.

Die Injektionsgeräte in Form der hier angedeuteten sechs Injektionseinheiten 4.1 bis 4.6 bestehen aus Harz- 25, Härter- 26 und Reinigungsflüssigkeits- 27 Behältern, Dosierpumpen 30, Mischkopf 32, Schläuchen und einer automatischen Reinigungseinheit zum Reinigen der Schläuche und des Mischkopfes 32.

Weiterhin umfassen die hier sechs Injektionseinheiten 4.1 bis 4.6 die erforderlichen Schläuche H, Harz- und Härterpumpen 29, ein integriertes Heizsystem zum Erhitzen der Rohre und des Tanks, Vakuumpumpen, Luftblasenerkennungssensoren, Temperatursensoren, Drucksensoren und Durchflusssensoren, die ebenfalls nicht dargestellt sind.

Es ist weiterhin eine automatische Nachfüllstation 17 vorgesehen, die mit den Injektionseinheiten 4.1 bis 4.6 verbunden ist. Die automatische Nachfüllstation 17 weist Vorrats-Behälter mit Harz 18, Härter 19 und/oder Reinigungsflüssigkeit 20 (z.B. Aceton) auf. Es kann mindestens ein zusätzlicher Vorratsbehälter 21 vorgesehen sein, beispielsweise für Harz, das aus der Form austritt.

Von der Nachfüllstation 17 führen angedeutete Leitungen P zu den Injektionseinheiten 4.1 bis 4.6, die wiederum mittels Kabeln C mit dem Hauptsteuergerät 1 kommunizieren.

Die Injektionseinheiten 4.1 bis 4.6 sind über Leitungen Z1 bis Z6 mit Anspritzpunkten P1 bis P6 am Formwerkzeug 1 verbunden, die zur Formkavität 13 führen.

Zu den Sekundärkomponenten gehören nicht dargestellte Pumpen, Ventile und Füllstand Sensoren sowie Steuerungssysteme zur Realisierung der Nachfüllprozesse zu den Injektionseinheiten.

Das in den Figuren 1 und 2 dargestellte Formwerkzeug W weist ein dargestelltes mechanisches, hydraulisches, pneumatisches oder magnetisches Spannsystem auf, je nach der zum Schließen der Form erforderlichen Schließkraft. Das Spannsystem dient zum Schießen der oberen Formhälfte 2 und der unteren Formhälfte 3 mit der erforderlichen Schließkraft, um dem Druck beim Injizieren des Harz-/Härtergemisches standzuhalten.

Weiterhin sind Temperatursensoren 5, Drucksensoren 6, Neigungssensoren 7, Abstandssensoren 7 und Durchflusssensoren 9 in das Formwerkzeug integriert (siehe Figuren 1 und 2). Es erfolgt mit der Hauptsteuereinheit eine kontinuierliche Überwachung des Injektionsprozesses (mittels Durchflusssensor/en, Temperatursensor(en), des Drucksensors/s), und des Aushärtungsprozesses (z. B. werkzeugelektrische Sensoren, Ultraschallsensoren, optische Sensoren oder Viskositätssensoren. Über die Hauptsteuereinheit 1 erfolgt die Regelung der Prozessparameter aller Injektionseinheiten 4.1, 4.2 ... 4.n.

Vorteilhafterweise weist das Formwerkzeug W auch ein oder mehrere nicht dargestellte Identifikations-Tags, ein Auswerfer System zum Ausbringen des fertigen Bauteils und ein Aushärteüberwachungssystem auf Zur Überwachung der Aushärtung werden beispielsweise Ultraschallsensoren eingesetzt.

Das neue Verfahren und die Vorrichtung wurden speziell für die Anforderungen bei der Herstellung von großformatigen Faserverbundbauteilen entwickelt. Die Integration mehrerer Injektionspunkte P1...Pn ist sein charakteristisches Merkmal, das ihm mehrere Vorteile gegenüber Einzelpunkt-Injektionssystemen bietet. Diese Vorteile äußern sich in einer besseren Harzverteilung, schnelleren Produktionszyklen und einer höheren Genauigkeit während des gesamten Injektionsprozesses, was zu einem wichtigen Wandel in der Verbundwerkstoff-Fertigungstechnologie führt.

Das System besteht beispielsweise aus insgesamt vier verschiedenen Komponenten: dem Hauptsteuergerät 1, den Injektionseinheiten 4,1 bis 4.n, von denen jede mit mindestens einem Injektionspunkt P1 bis Pn verbunden ist, der automatische Nachfüllstation 17 und dem Formwerkzeug W.

Die Steuereinheit 1 besteht aus einer zentralen Recheneinheit, Schnittstellenpanels, Software zur Prozesssteuerung und Kommunikationsmodulen. Dazu gehören auch Mikroprozessoren oder Mikrocontroller für die Verarbeitung von Befehlen und Daten; Schnittstellenmodule für die Kommunikation mit Sensoren und den Injektionseinheiten; Speichereinheiten für die Speicherung von Befehlen, Prozessparametern und Datenprotokollen; Steuerungsalgorithmen für die Koordinierung der Bewegungen der Injektionseinheiten -und die Verwaltung des Injektionsprozesses.

Das System verfügt über ein robustes Kommunikationsnetzwerk, wie z.B. Ethernet oder CAN-Bus, um den Datenaustausch zwischen den Injektionseinheiten und dem Steuergerät zu erleichtern. Der Datenaustausch des Kommunikationsnetzwerkes kann kabelgebunden oder drahtlos erfolgen.

Die Hauptsteuereinheit 1 ist so programmiert, dass sie jede Injektionseinheit 4.1 bis 4.n im System erkennt und mit ihm kommuniziert, wobei die Rollen und Verantwortlichkeiten jeder Injektionseinheit 4.1 bis 4.n auf der Grundlage der spezifischen Anforderungen des RTM-Prozesses mit Mehrfachinjektionstechnik definiert werden.

Die Hauptsteuereinheit 1 kann Sequenzen für die Harzinjektion definieren und dabei Faktoren wie die Werkzeuggeometrie und die Dynamik des Harzflusses berücksichtigen.

Es werden Synchronisationssignale oder zeitbasierte Auslöser verwendet, um die Bewegungen und Aktionen der einzelnen Injektionseinheiten 4.1 bis 4.n zu koordinieren.

In jeder Injektionseinheit 4.1 bis 4.n sind nicht dargestellte Sensoren und Überwachungsgeräte zur Bestimmung des Injektionsdrucks und der Durchflussrate integriert, um Echtzeit-Feedback über deren Status und Leistung zu erhalten.
- Die Änderungen an den Prozessparametern einer bestimmten Injektionseinheit können dann aufgrund der gemessenen Parameter wie Injektionsdruck und/oder der Durchflussrate vorgenommen werden
   oder
- die Änderungen an den Prozessparametern einer bestimmten Injektionseinheit werden auf der Grundlage der Echtzeit-Rückmeldungen der Durchflussrate und/oder des Injektionsdrucks von anderen Spritzeinheiten 4.1, 4.2 .....4.n und der Echtzeit-Sensorreaktion vom Werkzeug vorgenommen.

Die erfindungsgemäße Lösung stellt somit ein Mehrfachinjektionssystem mit sequenzieller Injektion und/oder variabler Druckinjektion zur Verfügung.

Eine Injektionseinheit 4.1 bis 4.n kann an einem oder zwei ggf. auch weiteren Injektionspunkten betrieben werden, je nach Anforderung des Kunden und/oder in Abhängigkeit von den Prozessanforderungen und/oder den komplexen Formen und Geometrien der Teile.

Jede Injektionseinheit weist einen separaten Mischkopf zum Mischen von Harz und Härter auf.

Der Mischkopf kann mit Temperatursensoren und/oder Drucksensoren ausgestattet sein (siehe **Figur 4**), um Temperatur und Druck des Harzsystems zum Zeitpunkt des Injektionsprozesses zu messen. Außerdem können Sensoren zur Erfassung des Mischungsverhältnisses der vermischten Komponenten integriert werden (z. Bsp. mit Dichtemessungen oder Spektroskopie oder dem Erfassen des Brechungsindex). Wenn das Mischungsverhältnis einzelner Komponenten vom gewünschten Mischungsverhältnis abweicht, sendet der Sensor ein Signal an das Hauptsteuergerät 1. Das Hauptsteuergerät 1 gibt daraufhin ein Signal an die jeweiligen Injektionseinheit/en, um Änderungen an den Durchflussmengen der jeweiligen Komponenten vorzunehmen und die Mischungsverhältnisse zu korrigieren. Der Mischkopf verfügt auch über eine Reinigungsoption, um den Mischkopf nach Beendigung des Injektionsvorgangs mit Reinigungsflüssigkeit zu reinigen.

Werden die hinterlegten Werte für das Mischungsverhältnis über- oder unterschritten, passt die Steuerung die jeweilige Fördermenge mittels einer Korrekturrechnung an.

Bei der sequentiellen Injektion handelt es sich um ein Verfahren, bei dem das Harzsystem sequenziell in die Formkavität 13 injiziert wird.

Zunächst leitet die erste Injektionseinheit 4.1 die Harzinjektion ein. Sobald die zweite Injektionseinheit 4.2 einen Harzfluss feststellt, wird diese aktiviert, um den Injektionsprozess fortzusetzen, während die erste Injektionseinheit 4.1 ihren Betrieb einstellt.

Dieses sequenzielle Injektionsmuster wird fortgesetzt, bis die gesamte Form nacheinander über die Injektionseinheiten 4.1 bis 4.n mit Harz gefüllt ist.

Bei der Injektionsmethode mit variablem Druck hingegen wird das Harz von allen Injektionseinheit 4.1 bis 4.n gleichzeitig eingespritzt.

Bei der Erfassung des Harzflusses senden die Sensoren zur Durchflusserkennung 9 eine Rückmeldung an die Hauptsteuereinheit 1. Die Hauptsteuereinheit 1 passt dann den Injektionsdruck jeder einzelnen Injektionseinheit 4.1 bis 4.n an.

Diese dynamische Anpassung ist wichtig, um das Einschließen von Luftblasen zu verhindern, insbesondere wenn Fließfronten aus mehreren Injektions-Punkten P1 bis Pn in der Form zusammenlaufen.

Durch die Regulierung des Injektionsdrucks in Echtzeit sorgt die variable Druckinjektionsmethode für eine gleichmäßige Harzverteilung und minimiert Defekte, was letztlich die Qualität des hergestellten Verbundstoffteils verbessert.

Das Hauptsteuergerät 1 erteilt den Injektionseinheiten 4.1 bis 4.n Befehle auf der Grundlage von Prozessanforderungen und den Messdaten der Sensoren. Es werden Echtzeit-Rückmeldedaten von allen in der Form integrierten Sensoren an das Hauptsteuergerät geliefert.

Diess Hauptsteuergerät 1 steuert den Betrieb der Injektionseinheiten 4.1 bis 4.n und koordiniert ihre Aktionen für eine optimale Leistung.

Die Automatisierung des Verfahrensablaufes erfolgt automatisch während des Injektionsprozesses.

Wenn der Bediener feststellt, dass die Injektionsroutinen aller Mehrfachinjektoren für die Produktion des jeweiligen Teils geeignet sind, kann er den Injektionsprozess starten.

Wenn der Bediener Änderungen an den Parametern für die Injektionsroutine vornehmen möchte, kann er die Parameter vor dem Start des Injektionsprozesses entsprechend den Anforderungen anpassen.

Dieser Prozess der Parameteranpassung gewährleistet einen korrekten Harzfluss während der Herstellung von Verbundwerkstoffteilen. Wenn jedoch während des Injektionsprozesses der Harzfluss nicht entsprechend den simulierten Daten (die im System gespeichert sind) funktioniert oder während des Prozesses Trockenstopps in der Form beobachtet werden (diese Rückmeldung wird von der in der Form implementierten Sensorik zur Erkennung von Luftblasen am Harzauslass und/oder zur Erkennung des Harzflusses in der Form empfangen), können einige Prozessparameter wie der Injektionsdruck aller Injektionseinheiten individuell geändert werden. Änderungen können in der Hauptsteuereinheit für zukünftige Anwendungen gespeichert werden. Dadurch erhält der Bediener eine teilweise Kontrolle, wenn er während des Injektionsprozesses einen Fehler feststellt.

Daher wird der Injektionsprozess bevorzugt vollautomatisch oder ggf. auch teilweise manuell (falls erforderlich) gesteuert, um eine ordnungsgemäße Harzimprägnierung der Gewebe auf der Grundlage der vom Sensorsystem gelieferten Rückmeldungen in Form von Echtzeit-Rückmeldedaten von allen in die Form integrierten Sensoren.

Dieser neue Ansatz wird die Verarbeitungsmöglichkeiten für schnellere Reaktionszeiten und eine bessere Kontrolle über den Injektionsprozess verbessern.

Eine Nachfüllstation 17, die mit großen Vorratsbehältern ausgestattet ist - ein Behälter 18 mit Harz, ein Behälter 19 mit Härter und ein Behälter 20 mit Reinigungsflüssigkeit, sorgt für eine stetige Versorgung der Behälter 25, 26, und 27 der einzelnen Injektionseinheiten 4.1, 4.2, ...4.n. Die Vorratsbehälter 18, 19, 20 können mit einem integrierten Heizsystem ausgestattet sein, wenn eine Vorwärmung von Harz- und Härterkomponenten erforderlich ist. Die Nachfüllstation 17 wird über Schläuche oder beheizbare Schläuche mit den Injektionseinheiten 4.1, 4.2, ...4.n verbunden und führt einen Nachfüllvorgang durch, wenn der/die Füllstandsensor(en) in den kleineren Behältern der Injektionseinheiten 4.1, 4.2, ...4.n dem Hauptsteuergerät 1 signalisiert, dass der erforderlichen Füllstand unterschritten wird. Dieser Nachfüllvorgang kann über die Hauptsteuerung 1 oder unabhängig voneinander gesteuert und betrieben werden.

Bevorzugt Wasser wird als Heiz-/Kühlmedium für die Beheizung/Kühlung der beiden Druckbehälter 18, 19 und der nicht dargestellten Schläuche verwendet.

Alle Behälter 18, 19 der Nachfüllstation und auch die nicht dargestellten Behälter der Injektionseinheiten 4.1, 4.2, ...4.n sind mit einem Rührwerk ausgestattet. Der Füllstand der Behälter wird bevorzugt kapazitive Sensoren gemessen, wodurch sichergestellt wird, dass die erforderliche Materialmenge im Vorratsbehälter vorhanden ist, bevor der Injektionsprozess fortgesetzt wird. Das Material wird über ein nicht dargestelltes Dünnschicht-Entgasungssystem ständig von Luft befreit.

Diese Vorförderpumpen sorgen auch für eine konstante Materialzufuhr zu den von Servomotoren angetriebenen Dosierpumpen, die als Zahnradpumpen ausgeführt sind. Die installierten Zahnradpumpen können vom Kunden über ihre Antriebsleistung und den Mischungsverhältnisbereich ausgewählt werden.

Das Mischungsverhältnis von Harz und Härter kann für das Bauteil vorher festgelegt oder auch während des Injektionsprozesses ermittelt und angepasst werden und auch in der Hauptsteuereinheit 1 visualisiert. Bei Unter- oder Überschreiten der hinterlegten Werte zum Mischverhältnis kann die Hauptsteuereinheit über einen Korrekturfaktur das Mischungsverhältnis und/oder die jeweilige Fördermenge nachregeln.

Das erfindungsgemäße System verfügt über Luftblasenerkennungssensoren, die das Vorhandensein von Luftblasen in den Schläuchen vor der Zuführung zum Werkzeug W messen. Die Temperaturen und Drücke werden sowohl in den Behältern 17, 18, und ggf. in den nicht dargestellten Behältern der Injektionseinheiten 4.1, 4.2 ...4n als auch in den nicht bezeichneten Rezirkulations- und Dosierleitungen ständig überwacht. Die Komponenten des Injektionsmaterials werden im statischen Mischkopf der Injektionseinheiten gemischt und über einen beheizbaren Schlauch dem Formwerkzeug W. Die Durchflussmenge jeder Komponente wird über Durchflusssensoren überwacht und ein aktuelles Mischungsverhältnis von der Hauptsteuerung 1 berechnet. Dies gewährleisteten einen konstanten Durchfluss und das materialspezifische Mischungsverhältnis.

Jede Injektionseinheit 4.1 bis 4.n kann je nach Produktionsanforderungen und Verarbeitungsparametern mit bis zu drei Komponentenversionen eines Mischkopfes 32 betrieben werden. Dabei ist jeder Injektionseinheit ein Mischkopf 32 zugeordnet (siehe **Figur 4**)**.** Der Mischkopf 32 ist mit mehreren Öffnungen oder Kanälen ausgestattet durch die verschiedene Harzkomponenten eingeführt werden können. Diese Komponenten können das Basisharz (ein oder mehrere), Härter (ein oder mehrere) und andere Additive umfassen. Die Auslegung hinsichtlich des Mischungsverhältnisses dient lediglich der Optimierung der Geschwindigkeiten, so dass ein großer Bereich der Förderleistung möglich ist. So spielt es keine Rolle, ob die Anlage für ein Mischungsverhältnis von 100:1 oder 100:100 ausgelegt werden soll.

Die Reinigung des Mischkopfes mit Luft und Reinigungsflüssigkeit, z.B. Aceton einschließlich der Schläuche würde bevorzugt gleichzeitig erfolgen.

Zur gezielten Steuerung des Injektionsprozesses können Formwerkzeuge W mit Harzauslässen 14, Temperatursensoren 5 und Drucksensoren 6 (Anzahl abhängig von der Werkzeuggröße) an das Hauptsteuergerät 1 angeschlossen werden. Ab einer Fläche der Preform 10 und somit des herzustellenden Bauteils werden bevorzugt zwei oder mehr Harzauslässe 14 an voneinander entfernten Punkten am Formwerkzeug W vorgesehen. Die Überwachung von Druck, Temperatur und Massenstromwird mit speziellen Harzauslässen 14 im Formwerkzeug W kombiniert. Diese bestehen aus einer kapazitiven Messeinheit mit einem oder mehreren kapazitiven Sensoren 15 zur Harzflusserkennung und einem pneumatisch gesteuerten Schlauchquetschventil (nicht dargestellt). Diese kapazitiven Sensoren 14 können auch zur Erkennung der Menge oder Größe von Luftblasen im Auslaufschlauch eingesetzt werden.

In der nachfolgenden Prozessautomatisierung dient dieser Kennwert der Steuerlogik zum automatischen Öffnen und Schließen der Harzauslässe 14, indem das Verhältnis zwischen der Kapazitätsänderung (Rückmeldung der Sensoren) und dem Volumen der im Harz vorhandenen Luftblasen ermittelt wird. Diese Rückmeldung wird dann an die Steuereinheit zurückgegeben, um die Prozessparameter der einzelnen Injektionseinheiten entsprechend zu ändern/zu regeln. Die Sensoren sind in der Form angebracht, um den Harzfluss in der Form während des Einspritzvorgangs zu erfassen. Außerdem verfügt die Form über verschiedene Arten von Sensoren (Abstandssensoren, Neigungssensoren), z. B. zur Erkennung des Abstands zwischen zwei Formhälften, zur Sicherstellung, dass die Form vor Beginn des Einspritzvorgangs ordnungsgemäß geschlossen ist, und auch zur Erkennung der Werkzeugwinkelposition.

In der Regel wird ein nicht dargestelltes elektrisches Heizsystem (oder ein anderes System, je nach Anwendung) für die Heizung/Kühlung der Form verwendet. Dieses Heiz-/Kühlsystem kann als separate Zusatzkomponente verwendet werden und wird separat oder von der Hauptsteuereinheit 1 gesteuert und bedient (je nach Größe der Form).

Das Werkzeug verfügt außerdem über eine Echtzeit-Überwachung des Aushärtungsprozesses. Dazu sind beispielsweise ein oder mehrere Sensor/en zur Überwachung der Aushärtung integriert. Dies können (dielektrische(r) Sensor(en), Ultraschallsensor(en), optische(r) Sensor(en), Viskositätssensor(en) sein.

Dieser/diese liefern die Informationen über die Viskosität und/oder den Tg-Wert (Glass Transition Temperatur) und/oder den Aushärtungsgrad in Echtzeit an die Hauptsteuereinheit 1.

In der Form sind dann beispielsweise nicht dargestellte Ultraschallsensoren eingebaut, die Informationen über den Abschluss des Aushärtungsprozesses liefern. Anhand dieser Informationen kann die Hauptsteuereinheit 1 die Prozessparameter optimieren, um qualitativ hochwertige Verbundwerkstoffteile für zukünftige Anwendungen zu erhalten.

Alle wichtigen Parameter wie Fördermengen, Mischungsverhältnis, Harzaustrag, Spülvorgänge, Temperatur des Mediums, Temperatur des Werkzeugs, Luftblaseneigenschaften, Injektionsdruck des Mediums und Werkzeuginnendruck werden von der Hauptsteuereinheit 1 kontrolliert und dokumentiert.

Die erforderlichen Änderungen der vorgenannten Parameter werden auf der Grundlage der von den Sensoren/Sensorsystemen in Echtzeit gelieferten Rückmeldungen vorgenommen.

Nachdem eine Prozessroutine erstellt wurde, kann sie für die Massenproduktion desselben Bauteils wiederholt werden. Da es sich um ein vollständig geschlossenes System handelt, wird die Oxidation oder Kristallisation des Harzsystems reduziert.

Bei Harzsystemen, die sehr stark auf die Umgebungsluft reagieren, ist es möglich, den Behälterüberdruck mit einer Stickstoffflasche anstelle von Druckluft zu reduzieren.

Das System verfügt über einen Überlastungsschutz für die nicht dargestellten Pumpen, den Mischkopf und die ebenfalls nicht dargestellten Schlauchleitungen. Das Fördern von Material bei geschlossenem Mischkopf wird somit automatisch verhindert.

Aus **Figur 4** ist die Verknüpfung zwischen Hauptsteuereinheit 1, einer beispielhaften Injektionseinheit 4.1 und dem Formwerkzeug W schematisch ersichtlich. Die Hauptsteuereinheit weist mindestens einen Monitor 22 (PC) auf sowie elektronische Schaltkreise und Schalttafeln 23 (der Steuerung) und Sensoranzeigen und Schalttafeln 24 auf. Die hier beispielhaft dargestellte Injektionseinheit 4.1 (sowie auch die anderen Injektionseinheiten 4.2... 4.n) verfügen über einen kleinen Vorratsbehälter für Harz 25 (Komponente 1), einen kleinen Vorratsbehälter für Härter 26 (Komponente 2) und einen kleinen Vorratsbehälter für Reinigungsflüssigkeit 27. Jeder kleine Behälter 25, 26, 27 verfügt über einen Füllstandssensor 28. Für den Injektionsprozess werden aus den Behältern 25, 26 mittels Pumpen 29 (Vorpumpen oder Zahnradpumpen) und Dosierpumpen 30 Harz und Härter über beheizbare Schläuche H, in denen Durchflusssensoren 31 integriert sind, zu einem Mischkopf 23 gefördert. In dem Mischkopf 32 sind ein oder mehrere Sensoren 33 angeordnet, dies sind insbesondere wenigstens ein Temperatursensor und/oder wenigstens ein Drucksensor und/oder wenigstens ein Dichte-/Ultraschall-/optischer Sensor. Vor dem Mischkopf führt ein Bypasssystem 34 von den Schläuchen H zurück zu den Behältern 25 und 26. In dem Mischkopf 32 werden die Komponenten Harz und Härter gemischt und über eine Zuleitung Z1 hier zum Injektionspunkt P1 des angedeuteten Formwerkzeuges W gefördert und in den Formenhohlraum mit der darin befindlichen Preform 10 injiziert.

Weitere Mischköpfe von identischen Injektionseinheiten 4.2 bis 4.6 werden ebenfalls mit den Injektionspunkten P2 bis P6 des Formwerkzeuges W verbunden und injizieren über diese ebenfalls die Harz-Härter-Mischung in das Formwerkzeug W.

Die Hauptsteuereinheit 1 ist über Kabel C mit dem/den Injektionseinheiten 4.1 bis 4.6 und dem Werkzeug gekoppelt. Sie Signale aller Sensoren des Werkzeuges und der Sensoren der Injektionseinheiten 4.1 bis 4.6 einschließlich der Sensoren des Mischkopfes 32 werden an die Hauptsteuereinheit bevorzugt in Echtzeit übermittelt. Die Hauptsteuereinheit 1 steuert in deren Abhängigkeit den Injektionsprozess der Injektionseinheiten 4.2 bis 4.6.

Am Formwerkzeug kann vorteilhafterweise eine weitere kleine nicht dargestellte Bedienstation angebracht sein, die für die Bedienung des Öffnens und Schließens des Formwerkzeugs W und des ebenfalls nicht dargestellten Auswerfens des fertigen Teils verwendet werden kann und außerdem verschiedene Smart-Light-Anzeigen für die verschiedenen Phasen des RTM-Prozesses enthält, wie z. B. den Prozessstatus des RTM-Prozesses, Fehler während des Prozesses usw.

Diese kleine Bedienstation dient nur zur Bedienung vor und nach dem Start des RTM-Prozesses. Sobald der Prozess gestartet ist, werden alle Funktionen über die Hauptsteuereinheit 1 gesteuert, bis der RTM-Prozess abgeschlossen ist. Nach Abschluss des Prozesses wird das mit Harz getränkte und ausgehärtete fertige Teil mit Hilfe eines pneumatischen oder hydraulischen nicht dargestellten Auswerfer Systems, das in die Form eingebaut ist, entnommen.

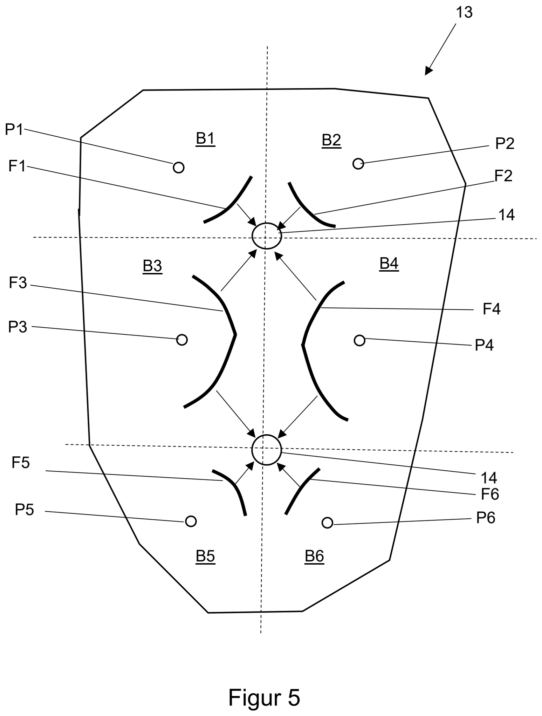

**Figur 5** zeigt eine sehr vereinfachte Darstellung von bereichsweise angedeuteten Fließfronten F1 bis F6 von injiziertem Harzgemisch, welches über hier sechs Injektionspunkte P1 bis P6 in das Formwerkzeug injiziert wurde.

Dabei wird schematisch der Umfang eines Formholraumes 13 angedeutet, der beispielhaft in sechs Bereiche B1 bis B6 unterteilt ist, siehe gestrichelte Linien. Die Aufteilung der Bereiche B1 bis B6 erfolgt gemäß der Flächenaufteilung der Preform und des daraus herzustellenden Bauteils. Zu jedem Bereich B1 bis B6 führt ein Injektionspunkt P1, P2.... P6, über welchen Harzgemisch in den Formenhohlraum 13 injiziert wurde.

Hier sind die Fließfronten F1, F2 und F5, F6, näher an einem Harzauslass 14 als die Fließfronten F3, F4, angedeutet durch die kürzeren und längeren Pfeile. Bei gleicher Fließgeschwindigkeit würden somit die Fließfronten F1, F2 und F5, F6, zuerst die Harzauslässe 14 erreichen und aus diesen austreten. Nachteiligerweise können dadurch Luftblasen aus dem Harzgemisch der Bereiche B3 und B4 nicht oder nur ungenügend entweichen. Dadurch, dass alle Fließfronten F1 bis F6 über entsprechende Sensoren im Werkzeug erkannt werden, besteht nun die Möglichkeit auf diese so Einfluss zu nehmen, dass die Fließfronten gleichzeitig an den Harzauslässen 14 antreffen. Dies wird dadurch realisiert, dass der Injektionsdruck in den Bereichen (hier B1, B2, B5, B6), in denen die Fließfronten (hier F1, F2, F5, F6) näher an den Harzauslässen 14 sind, reduziert wird und/oder dass der Injektionsdruck in den Bereichen (hier B3, B4), in denen die Fließfronten (hier F3, F4) weiter entfernt von den Harzauslässen 14 sind, erhöht wird.

Alternativ oder zusätzlich kann auch das injizierte Volumen des Harzgemisches an den Injektionspunkten (hier P1, P2, P5, P6) reduziert und/oder das injizierte Volumen an den Injektionspunkten (hier P3, P3) erhöht werden.

Es ist möglich, auch zwischen den beiden Bereichen B3 und B4 einen weiteren Harzauslass 14 vorzusehen, aus welchem dann Harzgemisch, welches über die Fließfronten F3 und F4 zugeführt wird, entweichen kann.

Um der Digitalisierung in der industriellen Produktion gerecht zu werden, kommunizieren die Sensoren des weitgehend mit "IO-Link" (IO-Link ist die erste, weltweit standardisierte IO-Technologie (IEC 61131-9) um mit Sensoren und auch Aktoren zu kommunizieren.)

Dieses System ermöglicht die bidirektionale Kommunikation von Werten, Schaltzuständen, Gerätedaten und Statusinformationen "on demand".

Mit der erfindungsgemäßen Lösung wurde ein neuartiges effizientes und komplexes System für ein RTM-Verfahren mit Mehrfachinjektionstechnik (RTM) sowie ein RTM-Verfahren geschaffen, mit welchen auch sehr große Bauteile in kurzer Zeit in hoher Qualität hergestellt werden können.

### Bezugszeichenliste

- 1: Hauptsteuergerät
- 2: obere Formhälfte
- 3: untere Werkzeughälfte
- 4.1, 4.2..... 4.n: Injektionseinheit/en
- 5: Temperatursensor/en
- 6: Drucksensor/en
- 7: Neigungssensor/en
- 8: Abstandssensor/en
- 9: Sensoren zur Durchflusserkennung
- 9.1: Sensoren zur Überwachung der Aushärtung
- 10: Preform
- 11: Kernmaterialien
- 12: äußere Faserschichten (z.B. aus Gewebe)
- 13: Formkavität
- 14: Harzauslass
- 15: kapazitiver Sensor/kapazitive Sensoren
- 15.1: durchsichtiger Bereich
- 16: Harz-Schließeinheit
- 17: Nachfüllstation
- 18: großer Vorrats-Behälter mit Harz (Komponente 1)
- 19: großer Vorratsbehälter mit Härter (Komponente 2)
- 20: großer Vorratsbehälter mit Reinigungsflüssigkeit
- 21: Zusätzlicher Behälter für Rücklauf des Harzsystems (Harz + Härter)
- 22: Monitor/PC
- 23: Elektrische Schaltkreise und Schalttafeln
- 24: Sensoranzeige(n) und Schalter(n)
- 25: Kleiner Vorratsbehälter auf der Injektionseinheit für Harz (Komponente 1)
- 26: Kleiner Vorratsbehälter auf der Injektionseinheit für Härter (Komponente 2)
- 27: Kleiner Vorratsbehälter auf der Injektionseinheit für Reinigungsflüssigkeit
- 28: Füllstandsensor(en)
- 29: Vorpumpen oder Zahnradpumpe(n)
- 30: Dosierpumpe/n
- 31: Durchflusssensor(en)
- 32: Mischkopf
- 33: Temperatursensor und/oder Drucksensor und/oder Dichte-/Ultraschall-/optischer Sensor
- 34: Bypass-System
- B1, B2... B6: Bereiche
- C: Kabel
- F1, F2... F6: Durchflussbereiche
- H: Heizbare Schläuche
- P: Leitungen
- P1, P2.... Pn: Injektionspunkte
- W: Formwerkzeug
- Z1, Z2,... Zn: Zuführleitungen von den Injektionseinheiten 4.1, 4.2...4.n zu den Injektionspunkten P1, P2.... Pn

## Patentansprüche

1. System zur Durchführung eines RTM (Resin Transfer Molding) -Verfahrens mit Mehrfachinjektionstechnik mit einem Formwerkzeug (W), welches eine obere Formhälfte (2) und eine untere Formhälfte (3) mit einer dazwischen ausgebildeten Formkavität (13) zum Einlegen einer Preform (10) aufweist, **dadurch gekennzeichnet, dass** das System eine Hauptsteuereinheit (1) und mehrere Injektionseinheiten (4.1, 4.2.... 4.n) zum Zuführen von Harzgemisch in der Formkavität (13) aufweist und von den Injektionseinheiten (4.1, 4.2.... 4.n) mehrere Injektionspunkte (P1, P2.... Pn) in das Formwerkzeug (W) und in dessen Formkavität (13) führen, wobei in das Formwerkzeug (W) und/oder die Injektionseinheiten (4.1, 4.2.... 4.n) Sensoren zur Überwachung von Prozessparametern integriert sind und die Sensoren mit der Hauptsteuereinheit (1) kommunizieren und dass das Werkzeug (W) mehrere Harzauslässe (14) aufweist.

2. System nach Anspruch 1, **dadurch gekennzeichnet, dass** in das Formwerkzeug Sensoren zur Erkennung des Fließverhaltens des injizierten Harzgemisches integriert sind, insbesondere Fließerkennungssensoren in Form von Druck-, Optische- und/oder Ultraschallsensoren und dass an mindestens einem Harzauslass des Formwerkzeuges mindestens ein kapazitiver Sensor an einem Entlüftungsschlauch angeordnet ist.

3. System nach Anspruch 1 oder 2, **dadurch gekennzeichnet, dass** die Hauptsteuereinheit (1) als Gehirn der Anlage (Master) mit den Injektionseinheiten (4.1, 4.2.... 4.n) zur Übertragung von Befehlen gekoppelt ist und dass insbesondere die in das Formwerkzeug (W) integrierten Sensoren Daten an die Hauptsteuereinheit (1) in Echtzeit übertragen.

4. System nach einem der Ansprüche 1 bis 3, **dadurch gekennzeichnet, dass** mit der Hauptsteuereinheit (1) über die in Echtzeit kontinuierlich übertragenen Daten kritische Daten anzeigbar sind und/oder der Status eines RTM-Prozesses anzeigbar ist, wobei insbesondere mit der Hauptsteuereinheit (1) Daten aus dem Formwerkzeug analysierbar sind, um die Leistung jeder einzelnen Injektionseinheit und die Harzverteilung innerhalb der Form zu bewerten und das mit der Hauptsteuereinheit die tatsächlichen Prozessparameter mit vordefinierten Zielen oder Sollwerten vergleichbar sind, insbesondere um festzustellen, ob Anpassungen erforderlich sind.

5. System nach einem der Ansprüche 1 bis 4, **dadurch gekennzeichnet, dass** mit dem Hauptsteuergerät (1) geänderten Parameter an jede einzelne Injektionseinheit (4.1, 4.2 ... 4.n) übertragbar sind, so dass in jeder Injektionseinheit diese Einstellungen unabhängig voneinander umsetzbar sind.

6. System nach einem der Ansprüche 1 bis 5, **dadurch gekennzeichnet, dass** durch die mit den Sensoren an die Hauptsteuereinheit (1) übermittelten Daten die Position von Fließfronten bestimmbar ist, wobei bevorzugt durch die Erkennung von Harzfließfronten durch die Hauptsteuereinheit (1) erkennbar ist, an welchen Stellen sich Harzfließfronten treffen werden.

7. System nach einem der Ansprüche 1 bis 6, **dadurch gekennzeichnet, dass** über die Hauptsteuereinheit (1) ein Bereich des Zusammentreffens der Harzfließfronten zu einem Harzauslass (14) und/oder einer Entlüftungsöffnung des Formwerkzeuges (W) leitbar ist.

8. System nach einem der Ansprüche 1 bis 7, **dadurch gekennzeichnet, dass** die Geschwindigkeit von Fließfronten mittels Änderung des Injektionsdrucks und/oder Änderung der der Durchflussmengen der einzelnen Injektionseinheiten veränderbar ist, um sie zu einem Harzauslass (14) und/oder einer Entlüftungsöffnung des Formwerkzeuges (W) leiten.

9. System nach einem der Ansprüche 1 bis 8, **dadurch gekennzeichnet, dass** es ausgangsseitig am Formwerkzeug (W) oder dessen Harzauslass (14) oder einem dem Harzauslass (14) nachgeordneten Bereich mindestens einen Sensor zur Erkennung von Luftblasen im Harzgemisch aufweist,

10. System nach Anspruch 9, **dadurch gekennzeichnet, dass** der mindestens eine Sensor zur Erkennung von Luftblasen in Form eines kapazitiven Sensors (15) und/oder eines optischen Sensors ausgebildet ist.

11. System nach Anspruch10, **dadurch gekennzeichnet, dass** im Bereich der Anordnung des Sensors zur Erkennung von Luftblasen ein mit dem Harzgemisch durchflossener Bereich als durchsichtiger Bereich (15.1) ausgebildet ist und dass außen am durchsichtigen Bereich der kapazitive Sensor 15 und/oder der optische Sensor angeordnet ist.

12. System nach einem der Ansprüche 1 bis 11, **dadurch gekennzeichnet, dass** der/die Sensoren zur Erkennung von Luftblasen mit der Hauptsteuereinheit (1) verbunden sind und Informationen über die Menge der im Harzgemisch vorhandenen Luftblasen an die Hauptsteuereinheit (1) übertragen und dass mit der Hauptsteuereinheit ein Signal an die Harzverschließeinheit übermittelbar ist, um die Harzauslässe automatisch zu schließen und zu öffnen.

13. System nach einem der Ansprüche 1 bis 12, **dadurch gekennzeichnet, dass** in dem Formwerkzeug (W) mindestens ein Drucksensor (5) angeordnet ist, mit dem der Innendruck im dem Formwerkzeug (W) während des Injektionsvorgangs messbar ist und dass mittels mindestens eines weiteren Drucksensors vor dem Formwerkzeug (W) der Injektionsdruck bestimmt wird und der Innendruck und der Injektionsdruck an das Hauptsteuergerät (1) übermittelbar und mit einer Steuerlogik mit vorher definierten maximalen Druckwerten vergleichbar und steuerbar sind.

14. Resin-Transfer-Moulding-Verfahren (RTM-Verfahren), durchgeführt mit einem System nach Anspruch 1, **dadurch gekennzeichnet, dass** mit den mehreren Injektionseinheiten (4.1, 4.2 ... 4.n) über mehrere Injektionspunkte (P1, P2 ... Pn) ein Mehrfachinjektions-RTM-Prozess in das Formwerkzeug (W) erfolgt, welcher über die Hauptsteuereinheit (1) gesteuert wird, wobei eine Koordination zwischen der Hauptsteuereinheit (1), den einzelnen Injektionseinheiten (4.1, 4.2 ... 4.n) und den Sensoren im und am Formwerkzeug (W) und/oder den Injektionseinheiten (4.1, 4.2 ... 4.n) während des gesamten Mehrfachinjektions-RTM-Prozesses einschließlich eines Aushärtungsprozesses erfolgt.

15. Verfahren nach Anspruch 14, **dadurch gekennzeichnet, dass** die Hauptsteuereinheit (1) als Gehirn der Anlage (Master) dient und Befehle an die einzelnen Injektionseinheiten überträgt, und dass die Injektionseinheiten als Ausführer der Befehle (Slave) fungieren und dass vorteilhafter Weise das Hauptsteuergerät die erforderliche Änderung der Prozessparameter an jede einzelne Injektionseinheit (4.1, 4.2 ...4.n) übermittelt, so dass jede Injektionseinheit (4.1, 4.2 ...4.n) diese Änderungen unabhängig voneinander erhält und umsetzt.

16. Verfahren nach Anspruch 14 oder15, **dadurch gekennzeichnet, dass** Sensoren, die in das System eingebettet sind, kontinuierlich in Echtzeit Daten an die Hauptsteuereinheit (1) übertragen und mittels der Hauptsteuereinheit der Status und die Dynamik des RTM-verfahrens ermittelbar / anzeigbar ist.

17. Verfahren nach einem der Ansprüche 14 bis16, **dadurch gekennzeichnet, dass** die Hauptsteuereinheit die mittels der Sensoren im Formwerkzeug ermittelten und an die Hauptsteuereinheit übertragenen Daten analysiert und Leistung jeder einzelnen Injektionseinheit und die Harzverteilung innerhalb der Form bewertet und diese Daten der tatsächlichen Ist-Prozessparameter mit vordefinierten Sollwerten vergleicht und bei Abweichungen von den Sollwerten erforderliche Änderungen der Prozessparameter durch die Hauptsteuereinheit definiert werden.

18. Verfahren nach einem der Ansprüche 14 bis 17, **dadurch gekennzeichnet, dass** durch eine Echtzeit-Kommunikation zwischen den im Formwerkzeug (1) verwendeten Sensoren und der Hauptsteuereinheit die Position von Harzfließfronten detektiert und, dass mittels der Hauptsteuereinheit ermittelbar ist, an welchen Stellen im Formwerkzeug (1) sich Harzfließfronten treffen werden.

19. Verfahren nach einem der Ansprüche 14 bis 18, **dadurch gekennzeichnet, dass** der Bereich des Zusammentreffens der Fließfronten zu einem Entlüftungspunkt geleitet wird, wofür die Geschwindigkeit der Fließfronten durch Änderung der Injektionsdrücke der Injektionseinheiten (4.1, 4.2 ... 4.n) und/oder die Durchflussmengen veränderbar ist.

20. Verfahren nach einem der Ansprüche 14 bis 19, **dadurch gekennzeichnet, dass** während des Injektionsverfahrens Luftblasen und die Menge der Luftblasen im Harzgemisch, welches aus den Harzauslässen des Formwerkzeuges austritt, mittels kapazitiver Sensoren und/oder optische Sensoren erkennt.

21. Verfahren nach einem der Ansprüche 14 bis 20, **dadurch gekennzeichnet, dass** die Kapazitiven und/oder optischen Sensoren Informationen über die Menge der im Harzsystem vorhandenen Luftblasen an die Hauptsteuereinheit weiterleiten und dass die Prozessparameter wie Injektionsdruck und/oder Durchflussmenge einer oder mehrerer Injektionseinheiten gleichzeitig geändert werden, um Luftblasen in dem Formwerkzeug zu vermeiden und dass insbesondere nach Änderung der Prozessparameter der Injektionseinheiten durch die Hauptsteuereinheit die Änderungen auf Basis der Daten der kapazitiven Sensoren und/oder optischen Sensoren analysiert werden und ein Signal an die Harzschließeinheit gesendet wird, um die Harzauslässe automatisch zu schließen, wenn Harzgemisch ohne Luftblasen austritt oder zu öffnen, wenn Luftblasen detektiert werden.

22. Verfahren nach einem der Ansprüche 14 bis 21, **dadurch gekennzeichnet, dass** während des Injektionsvorganges kontinuierlich der Innendruck im Formwerkzeug und der Injektionsdruck der Injektionseinheiten zum Formwerkzeug überwacht werden und dass Bereiche im Formwerkzeug mit zu hohem Druck (über einem definierten Grenzwert) selbständig erkannt werden und dass einen Auslass in diesem Bereich bzw. Bereichen durch Kommunikation mit der Harzschließeinheit oder den Steuerparametern der Injektionseinheiten öffnet, bis der Druck wieder im Grenzbereich liegt.
